(19)

**Europäisches Patentamt**
**European Patent Office**
**Office européen des brevets**

(11) **EP 4 764 206 A1**

(12) **EUROPEAN PATENT APPLICATION**

(43) Date of publication:
24.06.2026 Bulletin 2026/26

(21) Application number: 25224009.8

(22) Date of filing: 16.12.2025

(51) International Patent Classification (IPC):
F03D 7/02 (2006.01)   F03D 7/04 (2006.01)

(52) Cooperative Patent Classification (CPC):
F03D 7/0272; F03D 7/0276; F03D 7/043;
F05B 2270/32; F05B 2270/327

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 18.12.2024 IT 202400028902

(71) Applicant: FERRARI S.p.A.
41100 Modena (IT)

(72) Inventors:
• AGNELLO, Giuseppe
  41100 MODENA (IT)
• AGATHANGELOU, Panayiotis
  41100 MODENA (IT)
• ALOISI, Andrea
  41100 MODENA (IT)

• BERTAMINI, Stefano
  41100 MODENA (IT)
• BORRINO, Procolo Ivan
  41100 MODENA (IT)
• FENATI, Gianluca
  41100 MODENA (IT)
• LANZAVECCHIA, Matteo
  41100 MODENA (IT)
• PELLUCHON, Paul Marie Roger
  41100 MODENA (IT)
• PRESTIGIACOMO, Gioacchino
  41100 MODENA (IT)
• PRETAGOSTINI, Francesco
  41100 MODENA (IT)
• RIBIGINI, Marco Guglielmo
  41100 MODENA (IT)

(74) Representative: Studio Torta S.p.A.
Via Viotti, 9
10121 Torino (IT)

(54) **SYSTEM AND METHOD FOR CONTROLLING A WIND TURBINE WITH EXTENDED USAGE RANGE**

(57)    A control system (4) is described for a wind turbine (2) provided with blades (3) and an electrical machine (5) coupled to the blades (3) for the generation of electrical energy from wind kinetic energy. The system provides: a control stage (10), to generate control signals ($\delta_1$, $\delta_2$, $\delta_3$) for the electrical machine (5) through a feedback control based on measured quantities ($I_{dMEAS}$, $I_{qMEAS}$) and reference quantities ($I_{dTGT}$, $I_{qTGT}$); and a reference generation stage (20), to generate the reference quantities ($I_{dTGT}$, $I_{qTGT}$) for the control stage (10). The reference generation stage (20) determines a control target for the generation of reference quantities ($I_{dTGT}$, $I_{qTGT}$) using a characterization map of the wind turbine (2) and operating in closed loop based on feedback of wind speed to which the wind turbine (2) is subjected.

FIG. 2

EP 4 764 206 A1

**Description**

CROSS-REFERENCE TO RELATED APPLICATIONS

This patent application claims priority from Italian patent application no. 102024000028902 filed on December 18, 2024, the entire disclosure of which is incorporated herein by reference.

TECHNICAL FIELD

The present solution relates to a system and a method for controlling a wind turbine, which allows an extended usage range.

PRIOR ART

In a known manner, a wind turbine (or wind generator) is an electro-mechanical machine configured to transform wind kinetic energy (wind energy) into electrical energy, which can be stored or fed into the electrical grid.

In particular, the amount of wind motion (kinetic energy stored in the mass of the wind) is transformed into a torque on a rotor of an electric generator by the action of the blades of the wind turbine.

The characteristics and performance of the blades are therefore a key point for maximising the exploitation of the energy produced by the wind.

Each individual blade, having a certain diameter and wing profile, is capable of exploiting the kinetic energy stored in the wind in a generally rather limited wind speed range.

In particular, in the presence of a reduced wind speed, the consequent reduced mechanical speed on the rotor shaft of the electric generator may not be sufficient to be exploited for the transduction into electrical energy.

On the other hand, a high wind speed can lead to structural problems for the blades which may not be capable of withstanding the consequent high centrifugal forces.

For this reason, in the presence of wind speeds greater than a given threshold (depending on the characteristics of the blades), a mechanical brake is usually applied in the wind turbines to block or limit the rotation of the blades and prevent breaking.

Wind turbine blades are therefore generally capable of exploiting rather limited wind speed ranges to produce electrical energy, making such systems generally poorly efficient, considering the overall energy associated with the action of the wind.

OBJECT OF THE INVENTION

The object of the present disclosure is generally to provide a solution for controlling a wind turbine, which can allow overcoming or in any case limiting the problems previously highlighted.

In accordance with the objective indicated above, according to the present solution a system and a method are provided, as defined in the appended claims.

BRIEF DESCRIPTION OF THE FIGURES

The present invention will now be described with reference to the accompanying drawings, which illustrate a non-limiting example embodiment thereof, wherein:

- Figure 1 shows a wind turbine, in the example for marine use, for generating electrical energy on board a sailboat;
- Figure 2 is a schematic block diagram of a control system associated with the wind turbine, according to an embodiment of the present solution;
- Figure 3 shows a characterization map of the wind turbine, implemented in a characterization stage of the system of Figure 2;
- Figure 4 shows a block diagram of a control stage of the system of Figure 2; and
- Figure 5 shows a plot of quantities associated with the operation of the system of Figure 2.

DETAILED DESCRIPTION OF THE EMBODIMENTS

As will be described in detail below, an aspect of the present solution entails implementing a control system for managing the operation of a wind turbine, which allows to significantly extend a wind speed range usable by the blades to transform the kinetic energy associated with the wind mass into electrical energy, in order to increase the regenerative extraction of energy and at the same time preserve the blades from damage or breaking.

The solution that will be described may find advantageous, but not exclusive, application on board a marine vessel, for example a zero-emissions sailboat, for the conversion and storage of electrical energy from wind energy, thanks to the wide range of exploitable wind speeds (for example from 0 to 80 knots).

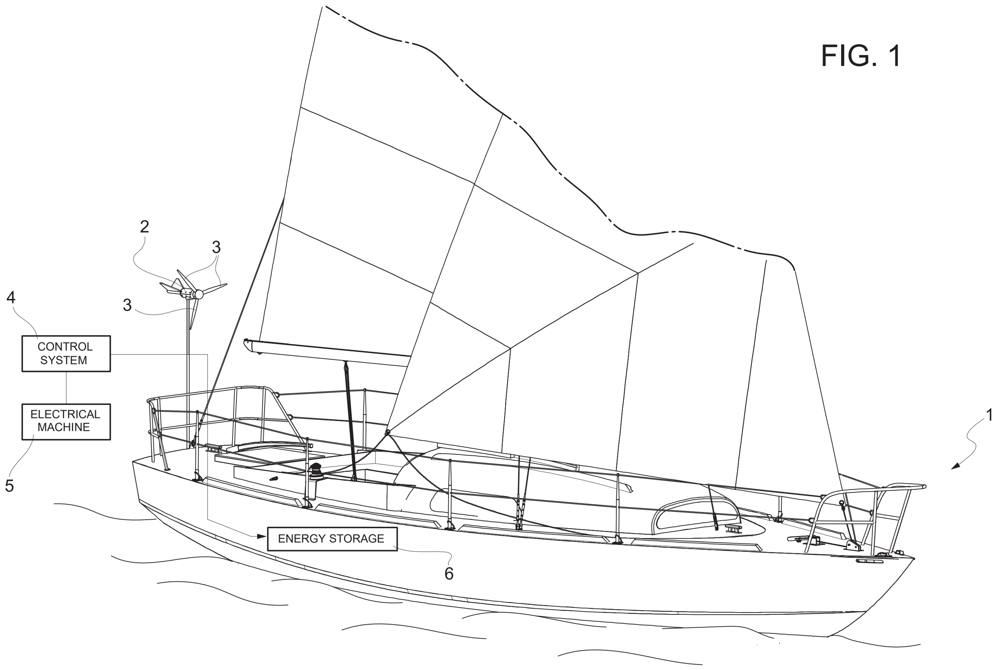

In this regard, Figure 1 shows, merely by way of example, a sailboat 1, on which a wind turbine 2 provided with a number of blades 3 is installed, suitably coupled to the hull of the same sailboat 1, for example arranged at a stern portion.

As schematically shown in Figure 1, the wind turbine 2 is provided with a control system 4, implemented by an electronic management unit (not illustrated herein), for example a microprocessor, microcontroller or similar digital processing unit, designed to control a corresponding electrical machine 5, including a rotor coupled to the blades 3 by means of a rotation shaft, for the generation of electrical energy from the rotation of the blades 3.

The wind turbine 2 is further operatively coupled to an electrical energy storage system 6, arranged on board the sailboat 1 and configured to provide electrical energy for the supply of on-board electrical loads (advantageously, such electrical energy being provided by the wind turbine 2 from the conversion of the wind energy).

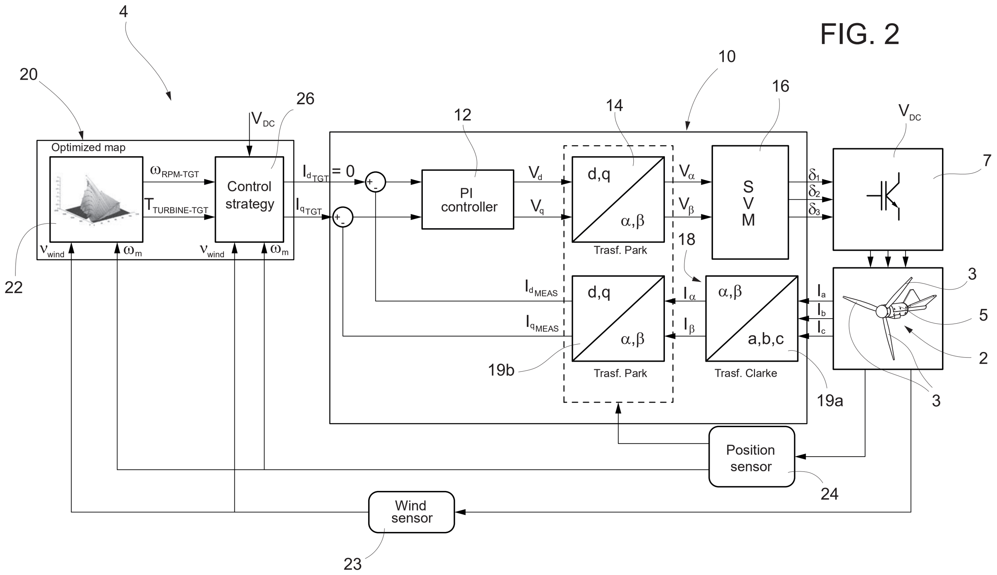

Figure 2 shows a block diagram of a possible implementation of the control system 4 of the wind turbine 2.

Such control system 4 is generally configured to provide control signals, denoted with $\delta_1$, $\delta_2$, $\delta_3$, for example pulse-width modulated signals, to an output stage 7, for example consisting of a three-phase inverter, which also receives a direct current supply voltage $V_{DC}$.

Such control signals $\delta_1$, $\delta_2$, $\delta_3$ are provided to the gate terminals of switches of the inverter of the output stage 7, for the generation of the modulated voltages required for the control of the electrical machine 5 of the wind turbine 2, for example being of the induction or permanent-magnet type, at a desired speed and/or torque.

In particular, the control system 4 comprises a control stage 10, of the vector modulation type (Space Vector Modulation, SVM), of a known type, not described in detail herein, configured to generate the aforesaid control signals $\delta_1$, $\delta_2$, $\delta_3$ based on reference (or target) quantities for the control action, in the illustrated implementation reference currents, in particular a vector of reference currents $I_{dTGT}$, $I_{qTCT}$ in a rotating biaxial system d-q associated with the wind turbine 2.

The control stage 10 comprises: a controller block 12, for example of the PI (Proportional Integral) type, configured to receive the reference currents $I_{dTGT}$, $I_{qTGT}$ and generate a corresponding vector of reference voltages $V_d$, $V_q$ in the rotating biaxial system d-q based on a feedback control; an inverse Park transform block 14, configured to generate, based on the reference voltages $V_d$, $V_q$, a corresponding vector of reference voltages $V_\alpha$, $V_\beta$ in a stationary biaxial system $\alpha$-$\beta$ associated with the same wind turbine 2; and a generator block 16, configured to generate the aforesaid control signals $\delta_1$, $\delta_2$, $\delta_3$ for the inverter, based on the vector of reference voltages $V_\alpha$, $V_\beta$, with SVM modulation technique.

The control stage 10 further comprises a feedback block 18, configured to generate, from three-phase measurement current signals $I_a$, $I_b$, $I_c$, provided by sensors coupled to the electrical machine 5, corresponding measurement current signals $I_{dMEAS}$, $I_{qMEAS}$ in the rotating biaxial system d-q, by means of a Clarke transform block 19a and a Park transform block 19b operating in sequence. Such measurement current signals $I_{dMEAS}$, $I_{qMEAS}$ constitute feedback signals for the control action performed by the controller block 12; in particular, a difference between the aforesaid reference currents $I_{dTGT}$, $I_{qTGT}$ and the measurement current signals $I_{dMEAS}$, $I_{qMEAS}$ defines a control input for the controller block 12.

The control system 4 further comprises a reference generation stage 20, configured to generate the reference currents for the control stage 10, in particular the vector of reference currents $I_{dTGT}$, $I_{qTGT}$ in the rotating biaxial system d-q.

According to a particular aspect of the present solution, such reference generation stage 20 is configured to: generate an optimal control target (or set-point) using a characterization map of the wind turbine 2 and wind speed information $v_{wind}$; and define an optimized control strategy, which entails a selection between different possible control modes of the electrical machine, as a function of the control set-point, in order to maximize the regenerated energy.

As will be discussed in detail, the reference generation stage 20 therefore operates in a closed loop, using the feedback of the wind speed to which the wind turbine 2 is subjected in the current operating condition.

In more detail, the reference generation stage 20 comprises a characterization map block 22, configured to receive as a feedback a wind speed signal $v_{wind}$ from a wind speed sensor 23, for example an anemometer, arranged at the wind turbine 2; and further a speed signal $\omega_m$ (indicative of the rotation speed of the rotor of the electrical machine 5) from a position sensor 24, for example a resolver, coupled to the wind turbine 2.

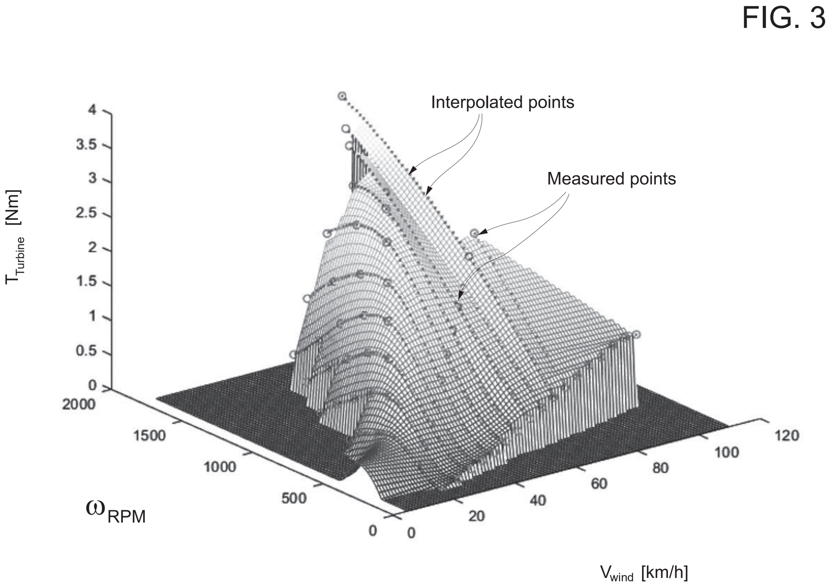

In particular, as illustrated in Figure 3 (which shows a characterization map of a possible turbine, merely by way of example), the characterization map block 22 defines a three-dimensional surface of optimized operating points, given by values of turbine torque $T_{Turbine}$ and turbine speed $\omega_{RPM}$, as a function of the wind speed $v_{wind}$.

Such characterization map is determined experimentally (for example by means of wind tunnel tests) and thereby defines optimal operating points for the wind turbine 2 (in particular, for the corresponding blades 3) as the wind speed varies.

In particular, during an experimental characterization step, a certain number of measured points are acquired, starting from which, through appropriate interpolations, the aforesaid three-dimensional surface is constructed for each value of wind speed $v_{wind}$ in an operating range of interest.

The aforesaid characterization map block 22 is therefore configured to output the optimal operating points, consisting of respective reference values of turbine torque $T_{Turbine\_TGT}$ and turbine speed $\omega_{RPM\_TGT}$, obtained on the aforesaid three-dimensional surface as a function of respective measured values of the wind speed $v_{wind}$ received as an input.

The reference generation stage 20 further comprises a control strategy definition unit 26, operatively coupled to the characterization map block 22 to receive the aforesaid reference values of turbine torque $T_{Turbine\_TGT}$ and turbine speed $\omega_{RPM\_TGT}$ and configured to define an optimized control strategy as a function of the control target and the wind speed $v_{wind}$ in order to maximize the regenerated energy.

Such control strategy definition unit 26, which also receives the supply voltage $V_{DC}$ as an input, then generates, as a function of the selected control strategy, the current references for the control stage 10, in particular the vector of reference currents $I_{dTGT}$, $I_{qTGT}$ in the rotating biaxial system d-q (in the example, the reference $I_{dTGT}$ is set to 0, but could also be different from 0, depending on the characteristics of the electrical machine).

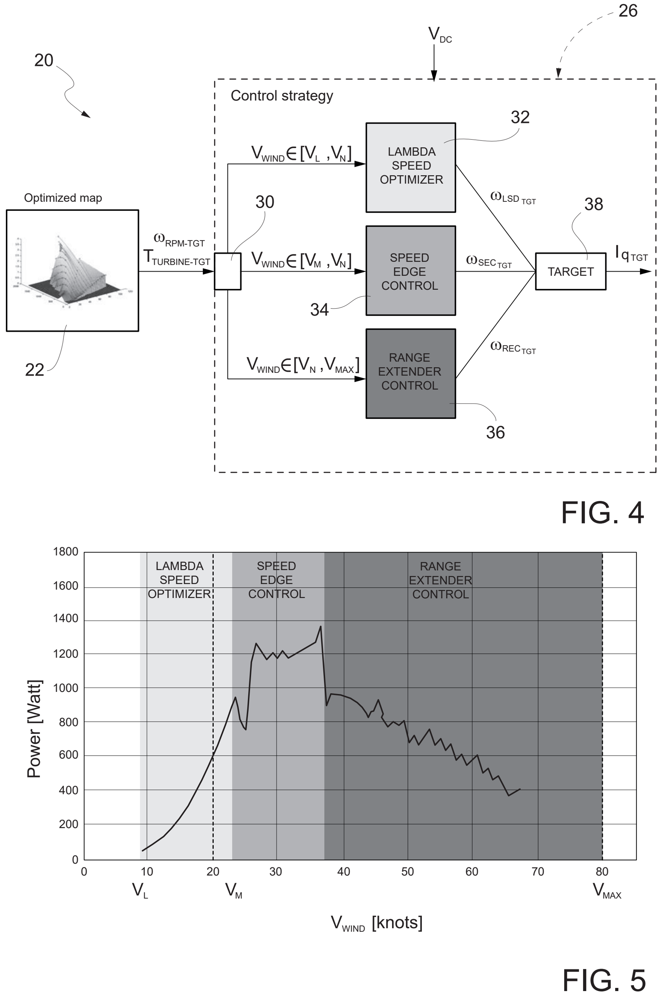

In more detail, and also referring to the implementation shown in Figure 4, the aforesaid control strategy definition unit 26 comprises an input switching block 30, coupled to the output of the characterization map block 22 and receiving the aforesaid reference values of turbine torque $T_{Turbine\_TGT}$ and turbine speed $\omega_{RPM\_TGT}$ representing the optimal operating point.

The input switching block 30, based on the values of the wind speed $v_{wind}$, is configured to switch the control strategy between three different control modes that can be alternatively implemented, including in particular:

> a first control mode, implemented in a first control block 32, if the wind speed $v_{wind}$ is comprised between a lower value $V_L$ (for example less than 10 knots) and a medium value $v_M$, higher than the aforesaid lower value $V_L$ (for example comprised between 20 and 30 knots);
> a second control mode, implemented in a second control block 34, if the wind speed $v_{wind}$ is comprised between the medium value $v_M$ and a high value $v_H$, higher than the aforesaid medium value $V_M$ (for example comprised between 30 and 40 knots); and
> a third control mode, implemented in a third control block 36, if the wind speed $v_{wind}$ is comprised between the high value $V_H$ and a maximum value $v_{MAX}$, higher than the aforesaid high value $V_H$ (for example equal to 80 knots).

In detail, in the first control mode (which is defined as LSD, Lambda Speed Optimizer), based on the geometric characteristics of the blade and the wind speed $v_{wind}$, the control strategy definition unit 26 generates an optimized speed reference or target for the electrical machine 5 based on the so-called "lambda" ratio between a tangential speed of the blade tip and the wind speed $v_{wind}$, according to the following expression:

$$\lambda_{ref} = \frac{\omega_m R_{tip}}{v_{wind}} \; \alpha \; \omega_{LSDTGT}$$

where $R_{tip}$ represents the blade radius and $\lambda_{ref}$ is a reference value for the aforesaid lambda ratio, on which a first speed reference $\omega_{LSDTGT}$ output from the first control block 32 depends (the aforesaid reference value $\lambda_{ref}$ is determined during the characterization step and corresponds to a maximum efficiency ratio of the wind turbine).

In the second control mode, denoted as SEC (Speed Edge Control), the strategy is decoupled from the aforesaid lambda ratio and the control strategy definition unit 26 generates a new optimized speed target, so as to bring the electrical machine to operate close to the so-called BEMF (Back-ElectroMotive Force) voltage, maximizing the corresponding electromechanical performance. This second control mode provides additional regenerative power, since the electrical machine maximizes its efficiency.

In this second control mode the following expressions apply:

$$\omega_{SEC_{TGT}} = max\left(\frac{V_{BEMF}(v_{wind})}{k_E}\right)$$

$$\omega_{SEC_{TGT}} > \omega_{LSD_{TGT}}$$

$$\omega_{SEC_{TGT}} < \frac{V_{DC}}{k_E}$$

where $\omega_{SEC\_TGT}$ is a second speed reference output from the second control block 34, $k_E$ is the voltage constant, and $V_{BEMF}$ is the BEMF voltage dependent on the wind speed $v_{wind}$.

The third control mode allows to further extend the control action, even beyond a range typically allowed by the characteristics of the wind turbine 2 (in particular of the corresponding blades 3); such third control mode is defined as REC (Range Extender Control).

Known solutions, as the wind speed $v_{wind}$ increases, do not allow generating more power because the speed required for the control exceeds the maximum performance of the rotating blades. In this third control mode, the control strategy definition unit 26 instead sets a maximum speed reference of the electrical machine, until the limits for the maximum regeneration torque are reached (effectively braking the rotation of the rotor with respect to the wind speed $v_{wind}$).

In this third control mode the following expressions apply:

$$\omega_{REC_{TGT}} = \omega_{SEC_{TGT}}$$

$$P_{wind_{REC}} > P_{wind_{SEC}}$$

$$\left| T_{wind_{REC}} \right| > \left| T_{wind_{SEC}} \right|$$

where $\omega_{REC\_TGT}$ is a third speed reference output from the third control block 36, $P_{wind_{REC}}$ and $T_{wind_{REC}}$ are the wind regeneration power and torque in the third control mode and $T_{wind_{SEC}}$ and $T_{wind_{SEC}}$ are the wind regeneration power and torque in the second control mode.

This third control mode thus allows guaranteeing the electrical regeneration and the stability of the control action in an additional, or extended, range of wind speeds that would not normally be exploited.

The control strategy definition unit 26 further comprises a reference (or target) generation block 38, configured to generate, as a function of the selected control strategy (and in particular of the aforesaid first, second or third speed reference $\omega_{LSD\_TGT}$, $\omega_{SEC\_TGT}$ or $\omega_{REC\_TGT}$ alternatively provided by the first, second or third control block 32, 34, 36), the current reference for the control stage 10, in particular the reference currents $I_{dTGT}$, $I_{qTGT}$ in the rotating biaxial system d-q (in the example, the only reference current $I_{qTGT}$ is indicated, since the reference current $I_{dTGT}$ is in this case set to 0).

Figure 5 shows the trend of the resulting regeneration power that can be obtained by means of the wind turbine 2 as a result of the control action exerted by the control system 4, in three different operating areas corresponding to the three control modes previously illustrated, implemented in the control strategy definition unit 26.

Based on what has been discussed, the advantages that the present solution allows to achieve emerge in an evident manner.

In any case, it should be noted that such solution entails the implementation of an active, predictive and finely calibrated control for a wind turbine, which allows, among other features, to significantly expand a range of wind speeds usable by the blades for energy recovery.

The expansion of the wind speed exploitation capacity involves a greater amount of regenerative energy that the system can extract from the wind moment and possibly store.

In particular, the predictive control allows not having to use mechanical brakes to stop the blades when the wind speed exceeds a given threshold.

The proposed control also allows to maximize the energy produced in conditions of nominal wind speed, implementing an MPPT (Maximum Power Point Tracking) control, which corrects a baseline of maximum power extracted at a test bench.

Finally, it is clear that modifications and variations can be made to what has been described without thereby departing from the scope of the present invention, as defined by the appended claims.

It should be noted in particular that the described solution can be advantageously used for any type of application, being particularly advantageous for marine applications (in which the blades of a wind turbine are subjected to wind speeds in a very wide range of variability).

For example, the described solution can be applied in the civil or industrial field or in any type of system in which a wide operating range is required for a wind turbine, provided with blades of limited size.

## Claims

1. A control system (4) for a wind turbine (2) provided with blades (3) and an electrical machine (5) coupled to the blades (3) for the generation of electrical energy from wind kinetic energy, comprising:

   a control stage (10), configured to generate control signals ($\delta_1$, $\delta_2$, $\delta_3$) for said electrical machine (5) through a feedback control based on reference quantities ($I_{dTGT}$, $I_{qTGT}$); and
   a reference generation stage (20), configured to generate the reference quantities ($I_{dTGT}$, $I_{qTGT}$) for the control stage (10),
   wherein said reference generation stage (20) is configured to determine a control target for the generation of said reference quantities ($I_{dTGT}$, $I_{qTGT}$) using a characterization map of the wind turbine (2) and operating in closed loop based on feedback of wind speed to which the wind turbine (2) is subjected.

2. The system according to claim 1, wherein said reference generation stage (20) comprises a characterization map block (22) configured to receive as feedback a wind speed signal ($v_{wind}$) from a wind speed sensor (23) arranged at the wind turbine (2); wherein said characterization map defines operating points for said wind turbine (2), given by values of turbine torque ($T_{Turbine}$) and turbine speed ($\omega_{RPM}$) as a function of the wind speed, and said characterization map block (22) is configured to output operating points for the definition of said control target, consisting of respective reference values of turbine torque ($T_{Turbine\_TGT}$) and turbine speed ($\omega_{RPM\_TGT}$) obtained from said characterization map as a function of values of the wind speed signal ($v_{wind}$) received as an input.

3. The system according to claim 2, wherein said characterization map is determined experimentally and defines a three-dimensional surface of operating points, given by values of turbine torque ($T_{Turbine}$) and turbine speed ($\omega_{RPM}$), optimized as a function of wind speed.

4. The system according to claim 2 or 3, wherein said reference generation stage (20) further comprises a control strategy definition unit (26), operatively coupled to the characterization map block (22) to receive said reference values of turbine torque ($T_{Turbine\_TGT}$) and turbine speed ($\omega_{RPM\_TGT}$) and configured to define a control strategy as a function of the control target and of the wind speed signal ($v_{wind}$) and to generate accordingly, as a function of the control strategy, said reference quantities ($I_{dTGT}$, $I_{qTGT}$) for the control stage (10).

5. The system according to claim 4, wherein said control strategy definition unit (26) comprises an input switching block (30) configured to switch the control strategy between different control modes, based on the values of the wind speed signal ($v_{wind}$).

6. The system according to claim 5, wherein said different control modes include:

a first control mode, implemented in a first control block (32) of said control strategy definition unit (26), if the wind speed is comprised between a lower value ($V_L$) and a median value ($v_M$), greater than the lower value ($V_L$);

a second control mode, implemented in a second control block (34), if the wind speed is comprised between the median value ($v_M$) and a high value ($v_H$), greater than the median value ($v_M$); and

a third control mode, implemented in a third control block (36), if the wind speed is comprised between the high value ($v_H$) and a maximum value ($v_{MAX}$), greater than the high value ($v_H$).

7. The system according to claim 6, wherein in the first control mode, based on geometric characteristics of the blades (3) of the wind turbine (2) and the wind speed, the first control block (32) of the control strategy definition unit (26) is configured to generate a first speed reference ($\omega_{LSDTGT}$) for the electrical machine (5) based on the ratio of a tangential speed of the blade tip and the wind speed corresponding to a maximum efficiency ratio of the wind turbine (2).

8. The system according to claim 7, wherein in the second control mode, the second control block (34) of the control strategy definition unit (26) is configured to generate a second speed reference ($\omega_{SECTGT}$) for the electrical machine (5) according to a BEMF, Back-ElectroMotive Force, voltage of the electrical machine (5), resulting in additional regenerative power as compared to the first control mode.

9. The system according to claim 8, wherein in the third control mode, the third control block (34) of the control strategy definition unit (26) is configured to generate a third speed reference ($\omega_{RECTGT}$) for the electrical machine (5) so as to extend control beyond a speed range allowed by the characteristics of the wind turbine (2) by setting a maximum speed reference for the electrical machine (5).

10. The system according to claim 9, wherein said control strategy definition unit (26) further comprises a reference generation block (38) configured to generate, as a function of the selected control strategy and said first, second or third speed reference ($\omega_{LSD\_TGT}$, $\omega_{SEC\_TGT}$ or $\omega_{REC\_TGT}$) alternatively provided by the first, second or third control block (32, 34, 36), said reference quantities ($I_{dTGT}$, $I_{qTGT}$) for the control stage (10).

11. The system according to any one of the preceding claims, wherein said control stage (10) is configured to implement a vector modulation control of said electrical machine (5) and said reference quantities ($I_{dTGT}$, $I_{qTGT}$) are reference currents in a rotating biaxial system (d-q) associated with the wind turbine (2).

12. A wind turbine (2) provided with blades (3) and an electrical machine (5) coupled to the blades (3) for the generation of electrical energy from wind kinetic energy, comprising a control system (4) according to any of the preceding claims.

13. A control method for a wind turbine (2) provided with blades (3) and an electrical machine (5) coupled to the blades (3) for the generation of electrical energy from wind kinetic energy, comprising:

generating control signals ($\delta_1$, $\delta_2$, $\delta_3$) for the electrical machine (5) through a feedback control based on reference quantities ($I_{dTGT}$, $I_{qTGT}$); and

generating said reference quantities ($I_{dTGT}$, $I_{qTGT}$),

wherein generating the reference quantities comprises determining a control target for the generation of said reference quantities ($I_{dTGT}$, $I_{qTGT}$) using a characterization map of the wind turbine (2) and operating in closed loop based on feedback of wind speed to which the wind turbine (2) is subjected.

14. The method according to claim 13, wherein generating the reference quantities comprises implementing a characterization map block (22) configured to receive as feedback a wind speed signal ($v_{wind}$) from a wind speed sensor (23) arranged at the wind turbine (2); wherein said characterization map defines operating points for said wind turbine (2), given by values of turbine torque ($T_{Turbine}$) and turbine speed ($\omega_{RPM}$) as a function of the wind speed signal ($v_{wind}$), and said characterization map block (22) is configured to output operating points for the definition of said control target, consisting of respective reference values of turbine torque ($T_{Turbine\_TGT}$) and turbine speed ($\omega_{RPM\_TGT}$) obtained on said characterization map as a function of measured values of the wind speed signal ($v_{wind}$) received as an input.

15. The method according to claim 14, comprising defining a control strategy as a function of the control target and the wind speed in order to maximize the generated energy and generate, as a function of the control strategy, said reference quantities ($I_{dTGT}$, $I_{qTGT}$); wherein defining comprises switching the control strategy between different control modes, based on the values of the wind speed signal ($v_{wind}$).

FIG. 1

ENERGY STORAGE

CONTROL SYSTEM

ELECTRICAL MACHINE

FIG. 2

EP 4 764 206 A1

FIG. 3

Interpolated points

Measured points

$T_{Turbine}$ [Nm]

$\omega_{RPM}$

$V_{wind}$ [km/h]

EP 4 764 206 A1

FIG. 4

FIG. 5

**EUROPEAN SEARCH REPORT**

Application Number

EP 25 22 4009

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DEKALI Z ET AL: "Speed controller efficiency of the TSR based MPPT of a variable speed wind power system", 2022 2ND INTERNATIONAL CONFERENCE ON ADVANCED ELECTRICAL ENGINEERING (ICAEE), IEEE, 29 October 2022 (2022-10-29), pages 1-5, XP034239971, DOI: 10.1109/ICAEE53772.2022.9962056 * the whole document * | 1-15 | INV.<br>F03D7/02<br>F03D7/04 |
| X | FEDELE EMANUELE ET AL: "Optimal Torque Curve Tracking for Wind Turbine Generators Using Adaptive Extremum Seeking", 2023 IEEE IAS GLOBAL CONFERENCE ON EMERGING TECHNOLOGIES (GLOBCONET), IEEE, 19 May 2023 (2023-05-19), pages 1-6, XP034360902, DOI: 10.1109/GLOBCONET56651.2023.10149903 * the whole document * | 1-15 | |
| X | SENJYU T ET AL: "Wind velocity and rotor position sensorless maximum power point tracking control for wind generation system", POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA,IEEE, US, vol. 3, 20 June 2004 (2004-06-20), pages 2023-2028, XP010739581, DOI: 10.1109/PESC.2004.1355428 ISBN: 978-0-7803-8399-9 * the whole document * | 1-10, 12-15 | **TECHNICAL FIELDS SEARCHED (IPC)**<br><br>F03D |

The present search report has been drawn up for all claims

| Place of search | Date of completion of the search | Examiner |
|---|---|---|
| The Hague | 7 April 2026 | Libeaut, Laurent |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)